# DEMANDE DE BREVET EUROPEEN

(11) **EP 2 312 500 A1**
(43) Date de publication de la demande: **20.04.2011**
(21) Numéro de dépôt: 10184999.0
(22) Date de dépôt: 22.08.2006
(51) Int. Cl.: G06K 17/00, G06Q 10/00, B65G 1/04, G06K 19/077

(54) **Produit comportant une étiquette électronique**

(30) Priorité: 23.08.2005 FR 0508700; 23.08.2005 FR 0508697; 23.08.2005 FR 0508698
(62) Demande divisionnaire de: 06794342.3
(71) Demandeur: Meditrace SAS, 91370 Verrières-leBuisson (FR)
(72) Inventeur: Folcke, Georges, 91370 Verrières-le-Buisson (FR); Gout, Eric, 91370 Verrières-le-Buisson (FR); Raoult, Christophe, 91370 Verrières-le-Buisson (FR)
(74) Mandataire: den Braber, Gerard Paul

(57) **Abrégé**

Le produit (125) comporte au moins une partie métallique (610) dont au moins un bord (605) est fin. Le produit comporte une étiquette électronique (160) dont une antenne (615) est positionnée sensiblement perpendiculairement à un bord fin de la partie métallique.
L'antenne (165) de l'étiquette électronique (160) présente une largeur, mesurée dans le sens de l'épaisseur de la partie métallique, supérieure à l'épaisseur du bord de la partie métallique en regard duquel l'antenne est positionnée.
Lorsque le produit est en forme de parallèlipipède rectangle, il comporte ladite étiquette électronique sur l'une des ses quatre faces les plus petites.

## Description

La présente invention concerne une armoire de stockage à lecture automatique d'étiquettes électroniques et un système informatique la comportant. Elle s'applique, en particulier, au stockage de fournitures hospitalières, de produits médicaux et de médicaments et au réassort des stocks concernés.

On connaît un appareil pour stocker et identifier des articles munis d'un code à barres décrit dans le document US 4,636,634. Les codes à barres fournissent une indication de l'identité des articles auxquels ils sont associés. Cet appareil comporte au moins un réceptacle adapté à recevoir un article muni d'un code, et, dans chaque réceptacle, des moyens de détection de présence pour détecter la présence d'un article dans le réceptacle, des moyens de lecture de codes à barres et des circuits reliés aux moyens de détection de présence et aux moyens de lecture pour fournir une indication de présence et d'identité d'articles dans les réceptacles.

Cet appareil est de construction complexe, puisque chaque réceptacle doit être muni de deux moyens pour détecter la présence d'un article, d'une part, et pour lire le code porté par cet éventuel article, d'autre part. De plus, cet appareil manque de fiabilité puisqu'un défaut de positionnement du code dans le réceptacle suffit à empêcher la lecture du code.

La présente invention vise à remédier à ces inconvénients.

A cet effet, la présente invention vise, selon un premier aspect, une armoire, caractérisée en ce qu'elle comporte :
- sur au moins une paroi, au moins une antenne comportant au moins deux boucles coplanaires sur au moins une desquelles le courant circule dans le sens des aiguilles d'une montre et, simultanément, sur au moins une autre boucle, le courant circule dans le sens inverse des aiguilles d'une montre,
- un circuit de génération de signaux émis par chaque dite antenne, pour générer un champ électromagnétique, et
- un circuit de réception de signaux modulant ledit champ magnétique.

Grâce à ces dispositions, des étiquettes électroniques se trouvant dans un volume très allongé en regard du plan desdites boucles peuvent être lues.

Selon des caractéristiques particulières, au moins une dite antenne comporte deux boucles.

Selon des caractéristiques particulières, au moins une dite antenne comporte trois boucles.

Selon des caractéristiques particulières, au moins une dite antenne comporte quatre boucles.

Selon des caractéristiques particulières, au moins une paroi sur laquelle se trouve au moins l'une des antennes constitue le fond de l'armoire.

Selon des caractéristiques particulières, au moins une paroi sur laquelle se trouve au moins l'une des antennes constitue une paroi latérale de l'armoire.

Selon des caractéristiques particulières, au moins une paroi sur laquelle se trouve au moins l'une des antennes constitue une paroi centrale de l'armoire.

Selon des caractéristiques particulières, le circuit de génération de signaux est adapté à générer successivement des signaux pour différents ensembles d'antennes.

Grâce à ces dispositions, des antennes se trouvant orientées selon différents axes, éventuellement orthogonaux entre eux, peuvent être lues successivement.

Selon des caractéristiques particulières, ladite armoire comporte des produits munis d'étiquettes électroniques et d'étiquettes papier, lesdites étiquettes électroniques se trouvant sur une face du produit opposée à une autre face du produit portant une étiquette papier.

Grâce à ces dispositions, l'utilisateur est incité à positionner le produit de telle manière que l'étiquette électronique se trouve face et à proximité du fond de l'armoire, le fond de l'armoire étant alors muni d'une antenne.

Selon des caractéristiques particulières, l'armoire telle que succinctement exposée ci-dessus comporte au moins une ouverture, le circuit de génération de signaux émis par les antennes étant asservi à la fermeture de ladite ouverture pour lire les étiquettes électroniques après au moins un intervalle de temps prédéterminé suivant l'instant de ladite fermeture.

Par exemple, cette durée prédéterminée est de quelques secondes. Grâce à ces dispositions, on réduit la durée d'émission d'un champ électromagnétique tout en maintenant à jour la connaissance des produits présents dans l'armoire. En choisissant une durée supérieure à dix secondes, on réduit aussi les risques de lire une étiquette électronique associée à un produit qui vient d'être retiré de l'armoire et qui pourrait être lue du fait de sa proximité avec l'armoire au moment de la fermeture.

Selon des caractéristiques particulières, ladite armoire comporte un lecteur de carte d'identification d'utilisateur.

Grâce à ces dispositions, on peut associer chaque produit retiré de l'armoire à l'identité de la personne qui l'a retiré, à un patient, à une procédure, à une salle d'opération ou à un docteur, par exemple.

Selon des caractéristiques particulières, ladite armoire comporte une serrure commandée électriquement, et des moyens de commande de ladite serrure adaptés à commander le déverrouillage de ladite serrure lorsque le lecteur de carte d'identification d'utilisateur a identifié un utilisateur.

Selon des caractéristiques particulières, l'armoire telle que succinctement exposée ci-dessus comporte des moyens d'alerte adaptés à déclencher une alerte lorsqu'un nombre minimum de produits d'une référence déterminée est atteint dans ladite armoire.

Selon des caractéristiques particulières, l'armoire telle que succinctement exposée ci-dessus comporte des moyens d'alerte adaptés à déclencher une alerte à l'approche de la date de péremption d'un produit présent dans ladite armoire.

Grâce à chacune de ces dispositions, la sécurité de l'approvisionnement en produits est améliorée.

Selon un deuxième aspect, la présente invention vise un système informatique, caractérisé en ce qu'il comporte :
- dans au moins un centre utilisateur de produits, au moins une armoire telle que succinctement exposée ci-dessus, contenant des produits provenant d'au moins un fournisseur ;
- un serveur possédant une base de données contenant des informations relatives aux produits contenus dans au moins une dite armoire, cette base de données étant associée à au moins une unité à micro processeur et à des moyens de communication avec ladite armoire ;
- un dispositif situé dans chaque centre utilisateur de produits comprenant une unité à micro processeur associée à des moyens de communication avec ledit serveur ;
- un dispositif situé chez chaque fournisseur comprenant une unité à micro processeur associée à des moyens de communication avec ledit serveur ;
- ledit serveur comportant des moyens d'accès sélectifs à la base de données, adaptés à permettre à chaque centre utilisateur de produits d'avoir accès à la totalité de son propre stock de produits contenus dans lesdites armoires, quels que soient les fournisseurs de ceux-ci, et à permettre à chaque fournisseur d'avoir accès, pour tous les centres utilisateurs de produits, à l'état du stock, dans lesdites armoires, relatif à ses seuls produits.

Grâce à ces dispositions, chaque centre utilisateur de produits peut connaître, en temps réel, l'état de ses stocks et leur localisation, chaque fournisseur peut programmer les fabrications et livraisons à venir et la confidentialité des données de chaque partie est assurée.

Selon des caractéristiques particulières, le serveur comporte un programme informatique adapté à déclencher des alertes lorsqu'un nombre minimum de produits d'une référence déterminée est atteint dans le stock d'un centre utilisateur de produits.

Selon des caractéristiques particulières, le serveur comporte un programme informatique permettant d'établir un suivi des ventes pour chaque fournisseur donnant un récapitulatif des références par centre utilisateur de produits et/ou par territoire.

Grâce à chacune de ces dispositions, la gestion des stocks est simplifiée et efficace à la fois pour les centres utilisateurs de produits et pour les fournisseurs de ces centres utilisateurs de produits.

Les autres avantages, buts et caractéristiques particulières de ce système informatique étant identiques à ceux de l'armoire telle que succinctement exposée ci-dessus, ils ne sont pas rappelés ici.

Avec les mêmes objets que les deux premiers aspects décrits ci-dessus, la présente invention vise, selon un troisième aspect, une armoire qui comporte :
- des moyens de lecture d'étiquettes électroniques mettant en oeuvre au moins une antenne générant, sous la commande de circuits électroniques, un champ magnétique ;
- un moyen d'accès au contenu de ladite armoire et
- un capteur de fermeture desdits moyens d'accès relié auxdits circuits électroniques, lesdits circuits électroniques étant adaptés, après chaque détection d'une fermeture des moyens d'accès, à commander la lecture d'étiquettes électronique à des instants déterminés en fonction de l'instant de fermeture des moyens d'accès.

Grâce à ces dispositions, on réduit la durée d'émission d'un champ électromagnétique tout en maintenant à jour la connaissance des produits présents dans l'armoire. En choisissant une durée supérieure à dix secondes, on réduit aussi les risques de lire une étiquette électronique associée à un produit qui vient d'être retiré de l'armoire et qui pourrait être lue du fait de sa proximité avec l'armoire au moment de la fermeture.

Selon des caractéristiques particulières, les circuits électroniques sont adaptés, après chaque détection d'une fermeture des moyens d'accès, à commander la lecture d'étiquettes électronique après un intervalle de temps prédéterminé suivant l'instant de fermeture des moyens d'accès.

Grâce à ces dispositions, on réduit les risques qu'une étiquette électronique associée à un produit qui vient d'être retiré de l'armoire et qui se trouve à proximité de l'armoire au moment de la fermeture des moyens d'accès, ne soit lue.

Selon des caractéristiques particulières, les circuits électroniques sont adaptés, après chaque détection d'une fermeture des moyens d'accès, à commander la lecture d'étiquettes électronique immédiatement après l'instant de fermeture des moyens d'accès.

Selon des caractéristiques particulières, les moyens de lecture comportent une pluralité d'antennes et en ce que les circuits électroniques de génération de signaux sont adaptés à commander successivement la génération de champs électromagnétiques par différents ensembles d'antennes.

Grâce à ces dispositions, des antennes se trouvant orientées selon différents axes, éventuellement orthogonaux entre eux, peuvent être lues successivement.

Selon des caractéristiques particulières, l'armoire telle que succinctement exposé ci-dessus comporte un lecteur de carte d'identification d'utilisateur.

Grâce à ces dispositions, on peut associer chaque produit retiré de l'armoire à l'identité de la personne qui l'a retiré, à un patient, à une procédure, à une salle d'opération ou à un docteur, par exemple.

Selon des caractéristiques particulières, l'armoire telle que succinctement exposée ci-dessus comporte une serrure commandée électriquement, et des moyens de commande de ladite serrure adaptés à commander le déverrouillage de ladite serrure lorsque le lecteur de carte d'identification d'utilisateur a identifié un utilisateur.

Selon un quatrième aspect, la présente invention vise un système informatique qui comporte :
- dans au moins un centre utilisateur de produits, au moins une armoire telle que succinctement exposée ci-dessus, contenant des produits provenant d'au moins un fournisseur ;
- un serveur possédant une base de données contenant des informations relatives aux produits contenus dans au moins une dite armoire, cette base de données étant associée à au moins une unité à micro processeur et à des moyens de communication avec ladite armoire ;
- un dispositif situé dans chaque centre utilisateur de produits comprenant une unité à micro processeur associée à des moyens de communication avec ledit serveur ;
- un dispositif situé chez chaque fournisseur comprenant une unité à micro processeur associée à des moyens de communication avec ledit serveur ;
- ledit serveur comportant des moyens d'accès sélectifs à la base de données, adaptés à permettre à chaque centre utilisateur de produits d'avoir accès à la totalité de son propre stock de produits contenus dans lesdites armoires, quels que soient les fournisseurs de ceux-ci, et à permettre à chaque fournisseur d'avoir accès, pour tous les centres utilisateurs de produits, à l'état du stock, dans lesdites armoires, relatif à ses seuls produits.

Grâce à ces dispositions, chaque centre utilisateur de produits peut connaître, en temps réel, l'état de ses stocks et leur localisation, chaque fournisseur peut programmer les fabrications et livraisons à venir et la confidentialité des données de chaque partie est assurée.

Selon des caractéristiques particulières, le serveur comporte un programme informatique adapté à déclencher des alertes lorsqu'un nombre minimum de produits d'une référence déterminée est atteint dans le stock d'un centre utilisateur de produits.

Selon des caractéristiques particulières, le serveur comporte un programme informatique permettant d'établir un suivi des ventes pour chaque fournisseur donnant un récapitulatif des références par centre utilisateur de produits et/ou par territoire.

Grâce à chacune de ces dispositions, la gestion des stocks est simplifiée et efficace à la fois pour les centres utilisateurs de produits et pour les fournisseurs de ces centres utilisateurs de produits.

Les autres avantages, buts et caractéristiques particulières de ce système informatique, objet du quatrième aspect de la présente invention étant similaires à ceux de l'armoire objet du troisième aspect de la présente invention, telle que succinctement exposée ci-dessus, ils ne sont pas rappelés ici.

Par ailleurs, l'utilisation d'étiquettes électroniques, par exemple de type RFID (acronyme de RadioFrequence IDentification pour identification radiofréquence) pose de nombreux problèmes lorsqu'elles sont en présence de pièces métalliques, comme, par exemple des pochettes métalliques dans lesquelles sont conservés des objets, des liquides ou des denrées. En effet, le champ électromagnétique de lecture de ces étiquettes électroniques est perturbé par les parties métalliques et gêne, si ce n'est interdit, la communication avec l'étiquette électronique.

La présente invention vise aussi à remédier à ces inconvénients.

A cet effet, la présente invention vise, selon un cinquième aspect, un produit comportant au moins une partie métallique dont au moins un bord est fin, caractérisé en ce qu'il comporte une étiquette électronique dont une antenne est positionnée sensiblement perpendiculairement à un bord fin de ladite partie métallique.

En effet, les inventeurs ont découvert que ces caractéristiques permettaient la lecture de l'étiquette électronique malgré la proximité entre la partie métallique est l'étiquette électronique.

Selon des caractéristiques particulières, l'antenne de l'étiquette électronique présente une largeur, mesurée dans le sens de l'épaisseur de la partie métallique, supérieure à l'épaisseur du bord de la partie métallique en regard duquel l'antenne est positionnée.

Selon des caractéristiques particulières, le produit tel que succinctement exposé ci-dessus est en forme de parallélépipède rectangle et comporte ladite étiquette électronique sur l'une des ses quatre faces les plus petites.

Selon des caractéristiques particulières, le produit tel que succinctement exposé ci-dessus est en forme de parallélépipède rectangle et comporte une étiquette papier positionnée sur une face du produit opposée à une face du produit portant ladite étiquette électronique.

Selon des caractéristiques particulières, le produit tel que succinctement exposé ci-dessus est en forme de parallélépipède rectangle et comporte une étiquette papier positionnée sur une face du produit adjacente à une face du produit portant ladite étiquette électronique par l'un de ses petits côtés.

Grâce à chacune de ces dispositions, lorsque l'on entrepose le produit, en pile ou verticalement dans une armoire, on est incité à le positionner de telle manière que son étiquette papier soit visible. Du fait de cette position, l'étiquette électronique est positionnée vers une antenne positionnée à l'effet de lire les étiquettes électroniques.

Selon un sixième aspect, la présente invention vise une armoire qui comporte des parois, des moyens de lecture d'étiquette électronique comportant au moins une antenne dans au moins l'une des parois de ladite armoire et des étagères supportant des produits tels que succinctement exposé ci-dessus.

Selon des caractéristiques particulières, les moyens de lecture comportent une pluralité d'antennes et en ce que les circuits électroniques de génération de signaux sont adaptés à commander successivement la génération de champs électromagnétiques par différents ensembles d'antennes.

Grâce à ces dispositions, des antennes se trouvant orientées selon différents axes, éventuellement orthogonaux entre eux, peuvent être lues successivement.

Les autres avantages, buts et caractéristiques particulières de cette armoire objet du sixième aspect de la présente invention étant similaires à ceux du produit objet du cinquième aspect de la présente invention, tel que succinctement exposée ci-dessus, ils ne sont pas rappelés ici.

Les différents aspects de la présente invention, et leurs caractéristiques essentielles ou particulières sont destinés à être combinés pour réaliser un système efficace d'identification de produits.

D'autres avantages, buts et caractéristiques de la présente invention ressortiront de la description qui va suivre, faite, dans un but explicatif et nullement limitatif en regard des dessins annexés dans lesquels :
- la figure 1 représente, schématiquement, un premier mode de réalisation d'une armoire conforme à la présente invention ;
- la figure 2 représente, schématiquement, un deuxième mode de réalisation d'une armoire conforme à la présente invention ;
- la figure 3 représente, schématiquement, une première forme d'antenne incorporée dans une armoire illustrée en figure 1 ou 2 ;
- la figure 4 représente, schématiquement, une deuxième forme d'antenne incorporée dans une armoire illustrée en figure 1 ou 2 ;
- la figure 5 représente, schématiquement, une troisième forme d'antenne incorporée dans une armoire illustrée en figure 1 ou 2 ;
- la figure 6 représente un produit particulièrement adapté à être stocké dans une armoire telle qu'illustrée en figure 1 ;
- la figure 7 représente, sous forme d'un logigramme, le fonctionnement d'une armoire telle qu'illustrée en figures 1 ou 2 ;
- la figure 8 représente un système informatique conforme à la présente invention et comportant une pluralité d'armoires telles qu'illustrées en figures 1 ou 2 et
- la figure 9 représente un organigramme de fonctionnement du système informatique illustré en figure 8.

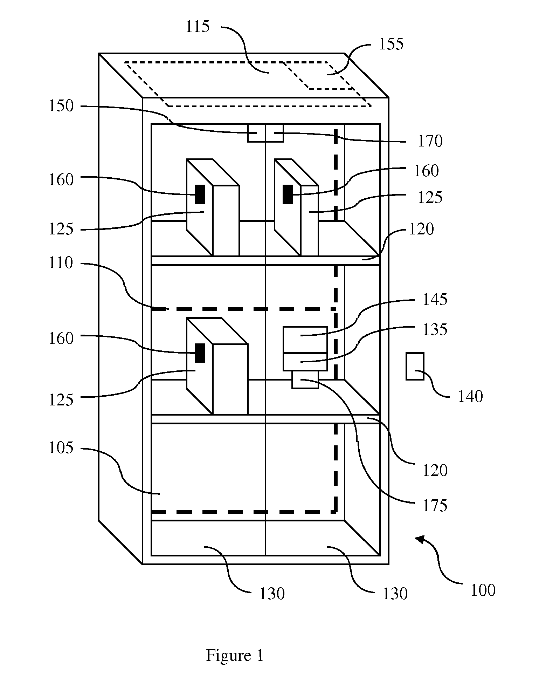

On observe, en figure 1, une armoire 100 comportant, dans ou sur sa paroi de fond 105, une antenne 110, dans sa partie supérieure, des circuits électroniques 115, des étagères 120 portants des produits 125 munis d'étiquettes électroniques 160, une serrure électrique 150, un moyen de communication 155, deux portes 130 dont l'une supporte un lecteur 135 de carte d'identification 140 et un afficheur 145, un capteur de fermeture des portes 170 et un bouton d'ouverture d'urgence 175.

L'armoire 100, les étagères 120 et les portes 130 sont constituées en des matériaux rigides, par exemple du bois, du verre ou une matière plastique.

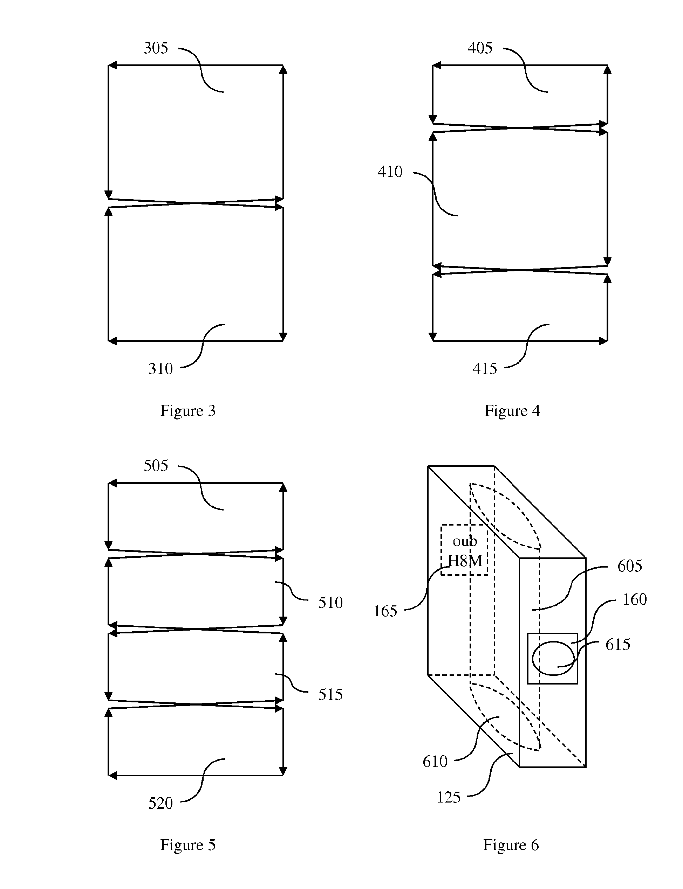

L'antenne 110 est liée à la paroi de fond 105 par exemple par collage, agrafage ou inclusion. L'antenne 110 possède l'une des formes d'antenne illustrées en figures 3 à 5.

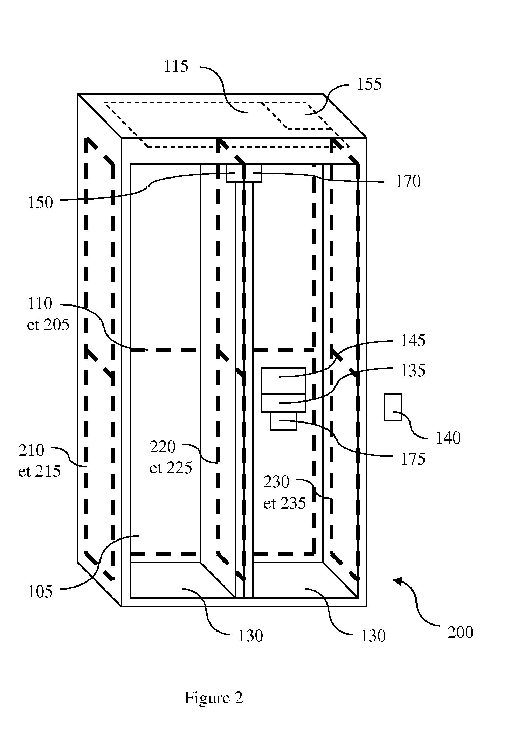

Les étiquettes électroniques 160 et les circuits électroniques 115 sont de type connu dans le domaine de l'identification radiofréquence (connu sous l'acronyme RFID pour RadioFrequence IDentification). Ils comportent, de manière connue en soi, un circuit de génération de signaux est adapté à générer successivement des signaux pour chaque antenne ou ensemble d'antenne incorporé dans l'armoire (voir aussi la figure 2) et un circuit de réception de signaux modulant ledit champ magnétique.

Les circuits électroniques 115 sont, par exemple, constitués d'un ordinateur et de circuits spécifiques au domaine des étiquettes électroniques RFID. Ils sont adaptés à fournir, à des instants prédéterminés en fonction de la fermeture des portes 130, à l'antenne 110 un signal lui permettant de générer un champ électromagnétique. Ce champ électromagnétique sert à l'alimentation des étiquettes électroniques 160 et à la transmission de messages, requêtes ou consignes aux étiquettes 160. Les circuits électroniques 115 sont aussi adaptés à détecter les signaux transmis par les étiquettes électroniques 160, par modulation du champ magnétique émis par l'antenne 110, à traiter ces signaux, à identifier les étiquettes électroniques et à transmettre ces identifiants aux moyens de communication 155.

Les circuits électroniques 115 sont aussi adaptés à traiter les signaux issus du lecteur 135 de carte 140 pour identifier un utilisateur et, à commander le fonctionnement de la serrure électrique 150, à détecter la fermeture des portes par l'intermédiaire du capteur 170 et à commander l'affichage de l'afficheur 145.

Les circuits électroniques 115 sont aussi adaptés à déverrouiller la serrure électrique 150 lorsque le bouton d'ouverture d'urgence 175 est pressé.

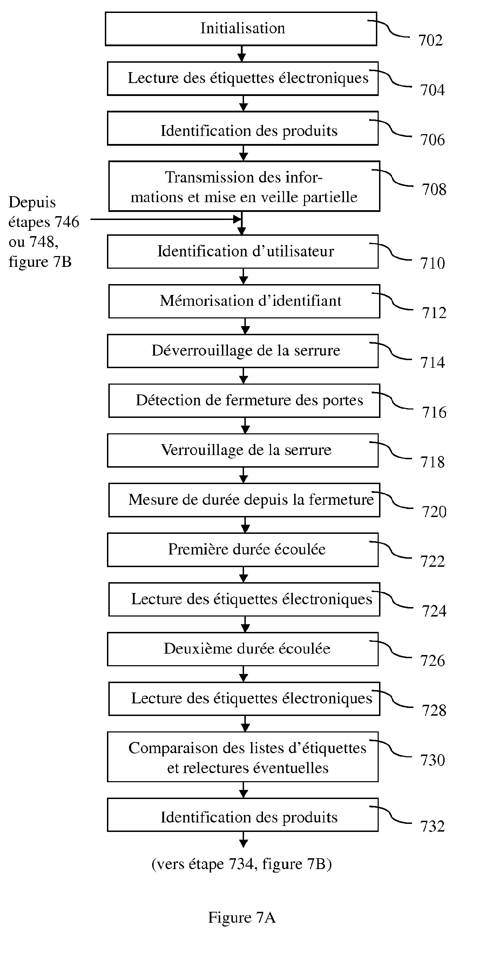

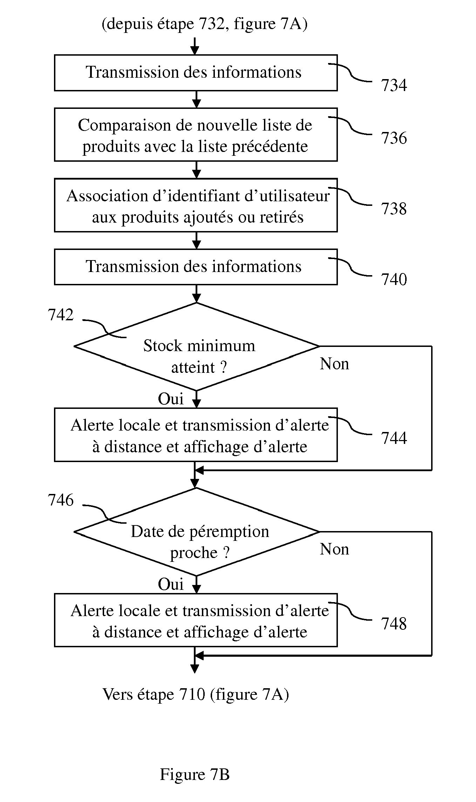

Le fonctionnement des circuits électroniques 115 est détaillé en regard de la figure 7.

La serrure électrique 150 est de type connu. Elle permet le verrouillage des portes 130. Le moyen de communication 155 permet la communication à distance avec un ordinateur, un serveur ou un système informatique comportant un réseau, selon des techniques connues, sur support filaire ou non filaire. Le moyen de communication 155 est, par exemple, un modem.

Le lecteur 135 de carte d'identification 140 est, par exemple, de type connu dans le domaine de l'identification radiofréquence. Dans ce cas, chaque carte 140 comporte un transpondeur, ou étiquette électronique et le lecteur 135 comporte une antenne d'émission et de réception de champs magnétiques modulés pour les échanges d'information nécessaires à l'identification des cartes 140.

En variante, le lecteur 135 est remplacé par un dispositif d'identification biométrique de type connu, pour identifier les utilisateurs qui accèdent au contenu de l'armoire 100.

L'afficheur 145 est de type connu, par exemple à écran à cristaux liquides (en anglais LCD pour Liquid Crystal Display) et permet d'afficher des messages visibles à destination des utilisateurs, par exemple des consignes pour leur identification, pour le positionnement des produits 125 dans l'armoire 100 et pour afficher des alertes au cas où le nombre de produits d'une référence donnée atteint une valeur prédéterminée ou dans le cas où l'un des produits approche de sa date de péremption.

Le capteur de fermeture des portes 170 est de type connu, à contact sec ou à effet Hall, par exemple. II est préférentiellement incorporé dans la serrure électrique 150.

Préférentiellement, lorsque la paroi de fond supporte une antenne, on s'arrange pour que les étiquettes électroniques ne puissent pas être à proximité immédiate de cette antenne. Par exemple, un prévoit une surépaisseur de la paroi de fond avançant, devant chaque antenne, dans l'intérieur de l'armoire.

On observe, en figure 2, dans une armoire 200, les mêmes éléments que dans la figure 1, les étagères et les produits n'ayant pas été représentés dans un but de clarté, auxquels s'ajoutent une antenne 205, dans ou sur la paroi de fond 105 de l'armoire 200, et des antennes 210, 215, 220, 225, 230 et 235, placées deux à deux dans ou sur des parois latérales 240 et 245 et centrale 250 de l'armoire 200. Dans ce cas, les circuits électroniques 115 sont adaptés à multiplexer les utilisations des antennes pour interroger successivement les étiquettes électroniques 160 dont les antennes sont positionnées selon des axes orthogonaux.

On observe, en figure 3, qu'une première forme d'antenne 300 incorporée dans une armoire illustrée en figure 1 ou 2 est constituée d'un « 8 », c'est-à-dire de deux boucles 305 et 310 coplanaires, le conducteur constituant cette antenne parcourant alternativement l'une ou l'autre des deux boucles, avec des sens de rotation opposés. Dans cette figure, un bobinage seul a été représenté, étant entendu que l'antenne comporte, en réalité un grande nombre de bobinages superposés.

Ainsi, lorsque le courant parcourt les deux boucles coplanaires, sur l'une des boucles, il circule dans le sens des aiguilles d'une montre et, simultanément, sur l'autre boucle, il circule dans le sens inverse des aiguilles d'une montre. Cette configuration permet de générer un champ électromagnétique sur un volume allongé à proximité de la paroi de fond 105 de l'armoire.

On observe, en figure 4, qu'une deuxième forme d'antenne 400 incorporée dans une armoire illustrée en figure 1 ou 2 est constituée de trois boucles 405, 410 et 415 coplanaires, le conducteur constituant cette antenne parcourant alternativement les trois boucles, avec des sens de rotation alternativement dans le sens des aiguilles d'une montre et dans le sens opposé. Dans cette figure, un bobinage seul a été représenté, étant entendu que l'antenne comporte, en réalité un grande nombre de bobinages superposés.

Ainsi, lorsque le courant parcourt les trois boucles coplanaires, sur au moins une des boucles, il circule dans le sens des aiguilles d'une montre et, simultanément, sur au moins une autre boucle, il circule dans le sens inverse des aiguilles d'une montre. Cette configuration permet de générer un champ électromagnétique sur un volume allongé à proximité de la paroi de fond 105 de l'armoire.

On observe, en figure 5, qu'une troisième forme d'antenne 500 incorporée dans une armoire illustrée en figure 1 ou 2 est constituée de quatre boucles 505, 510, 515 et 520 coplanaires, le conducteur constituant cette antenne parcourant alternativement les quatre boucles, avec des sens de rotation alternativement dans le sens des aiguilles d'une montre et dans le sens opposé. Dans cette figure, un bobinage seul a été représenté, étant entendu que l'antenne comporte, en réalité un grande nombre de bobinages superposés.

Ainsi, lorsque le courant parcourt les quatre boucles coplanaires, sur deux de ces boucles, il circule dans le sens des aiguilles d'une montre et, simultanément, sur deux autres boucles, il circule dans le sens inverse des aiguilles d'une montre. Cette configuration permet de générer un champ électromagnétique sur un volume allongé à proximité de la paroi de fond 105 de l'armoire.

Dans le cas de l'armoire illustrée en figure 2, par exemple, la paroi de fond supporte à la fois une antenne telle qu'illustrée en figure 3 et une antenne telle qu'illustrée en figure 4 et chaque paroi latérale ou centrale, supporte une antenne telle qu'illustrée en figure 3. Les inventeurs ont, en effet, découvert que cette configuration permettait de couvrir l'ensemble du volume intérieur de l'armoire 200 sans laisser de zones mortes, avec les champs électromagnétiques successivement émis par les différentes antennes.

On observe, en figure 6, un produit 125 comportant une étiquette papier 165 et l'étiquette électronique 160. Le produit comporte une partie métallique 610, ici un sachet métallique ou métallisé, fine, c'est-à-dire qui possède une épaisseur inférieure à un quart de sa plus grande dimension, sur au moins un de ses bords 605. L'étiquette électronique 160 possède une antenne 615 qui est positionnée sensiblement perpendiculairement à un bord fin de la partie métallique 610.

L'antenne 615 présente préférentiellement une largeur, mesurée dans le sens de l'épaisseur de la partie métallique 610, supérieure à l'épaisseur du bord 605 de la partie métallique en regard duquel l'antenne est positionnée.

Les inventeurs ont découvert que ces caractéristiques permettaient la lecture de l'étiquette électronique malgré la proximité entre la partie métallique est l'étiquette électronique.

Dans la figure 6, le produit 125 est en forme de parallélépipède rectangle et comporte l'étiquette électronique sur l'une des ses quatre faces les plus petites. Le produit 125 comporte aussi une étiquette papier 165 positionnée sur une face du produit opposée à la face du produit portant ladite étiquette électronique. L'étiquette papier 165 porte ici la référence « duo M8H ».

En variante, l'étiquette papier 165 est positionnée sur une face du produit adjacente à une face du produit portant ladite étiquette électronique 160 par l'un de ses petits côtés.

Ainsi, lorsque l'utilisateur entrepose le produit 125, en pile ou verticalement dans l'armoire 100 ou 200, il est incité à le positionner de telle manière que son étiquette papier 165 soit visible. Du fait de cette position, l'étiquette électronique 160 est positionnée vers la paroi de fond de l'armoire ou vers l'une des étagères, ce qui permet la lecture des étiquettes électroniques 165 par une antenne positionnée sur ou dans la paroi de fond ou une étagère, respectivement.

En effet, les inventeurs ont découvert que cette configuration permettait à la fois :
- à l'utilisateur de lire les indications portées par l'étiquette papier 165, sans déplacer le produit 125, lorsque les portes 130 de l'armoire sont ouvertes ou à travers ces portes 130 lorsqu'elles sont transparentes, et
- aux étiquettes électroniques 160 de se trouver à proximité et en regard de l'antenne supportée par la paroi de fond 105 de l'armoire.

Lorsque le produit 125 est plat, par exemple avec une épaisseur de 10 à 12 millimètres, l'étiquette électronique 160 comporte préférentiellement une antenne 615 de forme allongée, par exemple de 8 x 80 mm.

Comme on l'observe en figure 7, on effectue d'abord une étape d'initialisation 702 au cours de laquelle on définit des associations entre :
- des identifiants d'étiquettes électroniques et des références de produits,
- des identifiants d'étiquettes électroniques et des délais de péremption des produits,
- des nombres minimums de produits de chaque référence en dessous desquels on doit déclencher un renouvellement de produits de cette référence et
- des identifications de cartes avec des identifications d'utilisateurs.

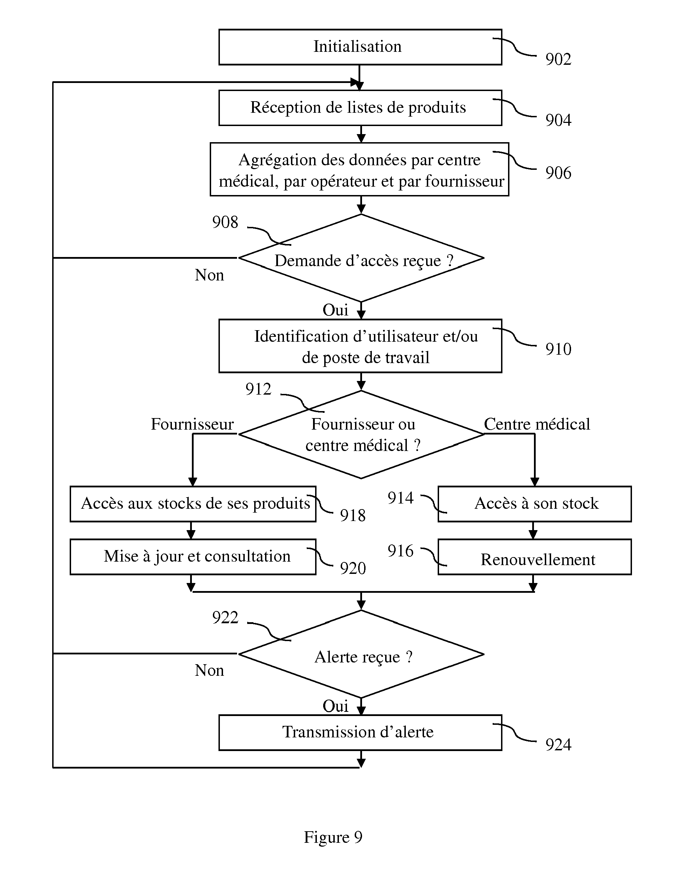

Cette étape 702 peut être réalisée par lecture de données dans une base de données locale et/ou distante, comme indiqué en regard de la figure 9.

Puis, les circuits de l'armoire effectuent une première lecture des étiquettes électroniques présentes dans l'armoire en générant successivement des champs magnétiques sur les différents ensembles d'antennes incorporés dans l'armoire, étape 704, les associent à des références de produit, étape 706, transmettent ces informations à distance, étape 708, et se mettent en veille en maintenant le lecteur 135 de carte d'identification 140 en état de marche et en affichant, sur l'afficheur, les instructions d'utilisation de l'armoire.

Lorsqu'un utilisateur se présente pour ouvrir l'armoire, il est identifié, étape 710, son identifiant est mémorisé, étape 712, et la serrure de l'armoire est déverrouillée, étape 714.

Lorsque le capteur de fermeture des portes de l'armoire indique que les portes sont fermées, étape 716, la serrure est verrouillée, étape 718 et la durée écoulée depuis la fermeture des portes est mesurée, étape 720.

Lorsque cette durée atteint une première valeur prédéterminée, par exemple dix secondes, étape 722, les étiquettes électroniques des produits présents dans l'armoire sont lues, étape 724, en mettant en oeuvre successivement les antennes de l'armoire.

Lorsque la durée écoulée depuis la fermeture de l'armoire atteint une deuxième valeur prédéterminée, par exemple une minute, étape 726, les étiquettes électroniques des produits présents dans l'armoire sont lues, étape 728, en mettant en oeuvre successivement les antennes de l'armoire.

Puis, on compare les listes d'identifiants obtenues au cours des étapes 724 et 728 et, si elles diffèrent, on effectue des lectures supplémentaires des identifiants des étiquettes électroniques, à des intervalles de temps prédéterminés, par exemple d'une minute entre deux lectures jusqu'à ce que trois lectures successives fournissent les mêmes listes, étape 730.

Puis, on associe les identifiants des étiquettes électroniques à des références de produit, étape 732 et on transmet ces informations à distance, étape 734.

Puis, on compare la liste des produits présents avec la liste des produits précédemment présents, étape 736, et on associe l'identification de l'utilisateur qui a ouvert l'armoire avec les références et identifiants des produits qui ont été ajoutés dans ou retirés de l'armoire, étape 738 et on transmet ces informations à distance, étape 740.

Puis, au cours d'une étape 742, on détermine si, pour une ou plusieurs références de produits, le nombre de produits présents dans l'armoire est inférieur ou égal à une valeur prédéterminée. Si oui, au cours d'une étape 744, on déclenche une alerte locale, on transmet cette information à distance et on affiche, sur l'afficheur les références des produits manquants.

Puis, si le résultat de l'étape 742 est négatif ou à la suite de l'étape 744, au cours d'une étape 746, on détermine si au moins un produit présent dans l'armoire possède une date de péremption dans un avenir de durée prédéterminée, par exemple un mois. Si oui, au cours d'une étape 748, on déclenche une alerte locale, on transmet cette information à distance et on affiche, sur l'afficheur les références des produits concernés.

Puis, si le résultat de l'étape 746 est négatif ou à la suite de l'étape 748, les circuits de l'armoire se mettent en veille en maintenant le lecteur 135 de carte d'identification 140 en état de marche et en affichant, sur l'afficheur, les instructions d'utilisation de l'armoire et on retourne à l'étape 710.

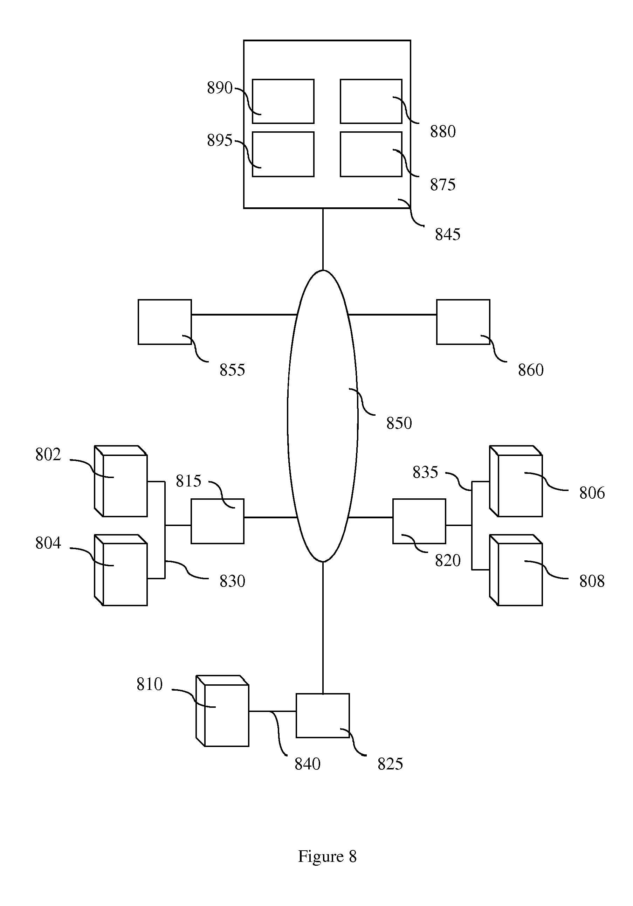

On observe, en figure 8, un système informatique 800 comportant une pluralité d'armoires 802 à 810, telles qu'illustrées en figures 1 ou 2 et reliées entre elles et à des postes de travail locaux 815, 820 et 825, par des réseaux locaux, respectivement 830, 835 et 840, un serveur 845 relié auxdits réseaux locaux, par un réseau externe 850 et des postes de travail externes 855 et 860 reliés, par l'intermédiaire du réseau externe 850 au serveur 845.

Les postes de travail 815, 820, 825, 855 et 860, ainsi que le serveur 845 sont de types connus et comportent, chacun, un microprocesseur et des moyens de communication, par exemple un modem, leur permettant de communiquer avec les réseaux auxquels ils sont directement reliés.

Les postes de travail locaux mettent en oeuvre plusieurs interfaces utilisateur. Une première interface utilisateur permet de prendre connaissance de l'inventaire des produits présents dans les différentes armoires du centre utilisateur de produits et, éventuellement, de lancer une lecture de toutes les étiquettes des produits présents dans les armoires pour vérifier l'inventaire, par exemple avant une opération médicale. Cette interface utilisateur permet aussi d'accéder à l'historique des inventaires passés.

Une deuxième interface utilisateur permet la gestion des renouvellements automatiques et leur transmission au serveur, qui les fait suivre aux fournisseurs concernés. Ce réapprovisionnement peut être effectué à heure fixe, par exemple après la fin de la journée de travail pour éviter de renouveler un produit qui est remis dans une armoire après en avoir été sorti, par exemple en prévision d'une intervention chirurgicale.

Une troisième interface utilisateur permet d'attribuer à un carte d'identification une signification complexe, par exemple, l'attribution des produits qui seront pris dans une armoire avec cette carte dans un intervalle de temps défini, à une salle d'opération, à un patient, à un utilisateur, à un docteur. Cette attribution permet la gestion des produits consommés au cours d'une opération et leur facturation, étant entendu que les produits remis ultérieurement dans l'une des armoires, identifiés par leur étiquette électronique sont recrédités au stock de produits.

Le réseau externe 850 est, par exemple, le réseau Internet.

Le serveur 845 comporte, de plus, une base de données 875, des moyens d'accès sélectifs 880 à la base de données par les postes de travail 815, 820, 825, 855 et 860, un programme informatique d'alerte 890 et un programme informatique de suivi 895.

La base de données 875 contient des informations relatives aux produits contenus dans les armoires 802 à 810.

Les postes de travail 855 et 860 sont mis en oeuvre par des fournisseurs de produits susceptibles d'être stockés dans des armoires objets de la présente invention, préférentiellement muni d'étiquettes papier et d'étiquettes électroniques disposées sur des faces opposées de ces produits.

Le poste de travail 815 et les armoires 802 et 804 se trouvent dans un premier centre utilisateur de produits et contiennent des produits provenant des fournisseurs mettant en oeuvre les postes de travail 855 et 860.

Le poste de travail 820 et les armoires 806 et 808 se trouvent dans un deuxième centre utilisateur de produits et contiennent des produits provenant des fournisseurs mettant en oeuvre les postes de travail 855 et 860.

Le poste de travail 825 et l'armoire 810 se trouvent dans un troisième centre utilisateur et contiennent des produits provenant des fournisseurs mettant en oeuvre les postes de travail 855 et 860.

Les moyens d'accès sélectifs 880 à la base de données sont de type connu, par exemple logiciel d'authentification (par exemple à nom d'utilisateur et mot de passe ou à reconnaissance de carte ou biométrique) ou de signature et sont adaptés à permettre à chaque centre utilisateur de produits d'avoir accès à la totalité de son propre stock de produits contenus dans les armoires 802 à 810, quels que soient les fournisseurs de ceux-ci.

Les moyens d'accès sélectifs 880 sont aussi adaptés à permettre à chaque fournisseur d'avoir accès, pour tous les centres utilisateurs de produits, à l'état du stock, dans les armoires 802 à 810, relatif à ses seuls produits.

Le programme informatique d'alerte 890 est adapté à déclencher des alertes lorsqu'un nombre minimum de produits d'une référence déterminée est atteint dans le stock d'un centre utilisateur de produits. Cette alerte peut être utilisée pour augmenter le nombre de produits à renouveler dans le but d'éviter qu'une nouvelle alerte se reproduise.

Le programme informatique de suivi 895 permet d'établir un suivi des ventes pour chaque fournisseur en donnant un récapitulatif des références par centre utilisateur de produits et/ou par territoire.

Chaque poste de travail d'un centre utilisateur de produits pouvant être connecté par Internet au serveur 845, il peut s'identifier et recevoir des informations sur les produits en stock, c'est-à-dire entrant dans une armoire ou sortant d'une armoire du centre utilisateur de produits en question. Chaque poste de travail d'un centre utilisateur de produits peut aussi consulter les délais de livraison des produits stockés, en vue de gérer leur renouvellement.

Comme on l'observe en figure 9, on effectue d'abord une étape d'initialisation 902 des différents dispositifs informatiques, au cours de laquelle on constitue la base de données des références de produits et de leurs fournisseurs ainsi que les moyens d'authentification des utilisateurs et/ou des différents postes de travail susceptibles d'accéder à la base de données.

Puis, au cours d'une étape 904, chaque armoire fournit une première liste des produits qu'elle contient, liste qui est automatiquement renouvelée après chaque fermeture des portes de ces armoires et complétée par des alertes et des identifications d'utilisateurs, comme expliqué précédemment.

Au cours d'une étape 906, le serveur agrège les données reçues par centre utilisateur de produits et par fournisseur et par utilisateur.

Au cours d'une étape 908, le serveur détermine si une demande d'accès à la base de données a été reçue. Si non, on retourne à l'étape 904. Si le résultat de l'étape 908 est positif, au cours d'une étape 910, on identifie l'utilisateur et/ou le poste de travail qui tente d'accéder à la base de données.

Si l'identification échoue, on retourne à l'étape 904. Si l'identification réussit, au cours d'une étape 912, on détermine si l'utilisateur et/ou le poste de travail qui tente d'accéder à la base de données est un poste de travail de centre utilisateur de produits ou un poste de travail de fournisseur.

S'il s'agit d'un centre utilisateur de produits, on lui donne accès à la totalité de son propre stock de produits contenus dans les armoires de ce centre utilisateur de produits, quels que soient les fournisseurs de ceux-ci, étape 914.

On lui permet aussi, étape 916, de renouveler des produits auprès des fournisseurs, auquel cas la demande de renouvellement est acheminée aux fournisseurs concernés. A cet effet, le centre utilisateur de produits sélectionne, dans la base de données, les références et les quantités de produits pour renouveler le stock, les bons de renouvellement étant automatiquement répartis entre les fournisseurs des références concernées.

Si, au cours de l'étape 912, on détermine que l'accès est effectué par un fournisseur, au cours d'une étape 918, on permet à ce fournisseur d'avoir accès, simultanément pour tous les centres utilisateurs de produits, à l'état du stock, dans lesdites armoires, relatif à ses seuls produits.

On lui permet aussi, étape 920, de mettre à jour ses références de produits, de prix et de délais de livraison et de consulter les bons de renouvellement qui lui ont été passés. A cet effet, le serveur permet d'établir un suivi des ventes pour chaque fournisseur donnant un récapitulatif des références par centre utilisateur de produits et/ou par territoire, selon des techniques connues.

A la suite de l'une des étapes 916 ou 920, on détermine si une alerte a été reçue de la part d'une armoire, étape 922, et, si oui, on fait suivre cette alerte au poste de travail du centre utilisateur de produits concerné, étape 924. Puis, si le résultat de l'étape 922 est négatif ou à la suite de l'étape 924, on retourne à l'étape 904.

Comme il ressort de ce qui précède, l'invention apporte une grande amélioration à la technique existante en fournissant une installation permettant d'assurer de façon simple et efficace la gestion de stock de matériel médical dans les centres utilisateurs de produits, ainsi que de gérer le flux de matériel entre les fournisseurs et ces centres utilisateurs de produits tout en permettant aux fournisseurs de gérer leur stock en dépôt dans chacun des centres utilisateur de produits. Ce matériel peut être du matériel à usage unique, ou du matériel pouvant être recyclé notamment les matériels utilisés pour la pose de certaines prothèses.

## Revendications

1. - Produit (125) comportant au moins une partie métallique (610) dont au moins un bord (605) est fin, **caractérisé en ce qu'**il comporte une étiquette électronique (160) dont une antenne (615) est positionnée sensiblement perpendiculairement à un bord fin de ladite partie métallique.

2. - Produit (125) selon la revendication 1, **caractérisé en ce que** l'antenne (615) de l'étiquette électronique (160) présente une largeur, mesurée dans le sens de l'épaisseur de la partie métallique (610), supérieure à l'épaisseur du bord de la partie métallique en regard duquel l'antenne est positionnée.

3. - Produit (125) selon l'une quelconque des revendications 1 ou 2, **caractérisé en ce qu'**il est en forme de parallèlipipède rectangle et comporte ladite étiquette électronique sur l'une des ses quatre faces les plus petites.

4. - Produit selon l'une quelconque des revendications 1 à 3, **caractérisé en ce qu'**il est en forme de parallèlipipède rectangle et comporte une étiquette papier (165) positionnée sur une face du produit opposée à une face du produit portant ladite étiquette électronique (160).

5. ― Produit selon l'une quelconque des revendications 1 à 4, **caractérisé en ce qu'**il est en forme de parallèlipipède rectangle et comporte une étiquette papier positionnée sur une face du produit adjacente à une face du produit portant ladite étiquette électronique par l'un de ses petits côtés.

6. - Armoire (100), **caractérisée en ce qu'**elle comporte des parois, des moyens de lecture (110, 115) d'étiquettes électroniques (160) comportant au moins une antenne (110) dans au moins l'une des parois (105) de ladite armoire et des étagères (120) supportant des produits selon l'une quelconque des revendications 1 à 5.

7. - Armoire (100) selon la revendication 6, **caractérisée en ce que** les moyens de lecture (110, 115) comportent une pluralité d'antennes (110, 205, 210, 215, 220, 225, 230, 235) et **en ce que** les circuits électroniques de génération de signaux (115) sont adaptés à commander successivement la génération de champs électromagnétiques par différents ensembles d'antennes.
